(19) Europäisches Patentamt
European Patent Office
Office européen des brevets

(11) Veröffentlichungsnummer: **0 165 203**
**B1**

# (12) EUROPÄISCHE PATENTSCHRIFT

(45) Veröffentlichungstag der Patentschrift: **14.09.88**

(51) Int. Cl.[4]: **C 07 F 9/38**, C 07 F 9/40, C 07 F 9/30, C 07 F 9/32, A 01 N 57/22

(21) Anmeldenummer: **85810158.7**

(22) Anmeldetag: **11.04.85**

## (54) Neue Phosphon- und Phosphinsäurederivate mit herbizider Wirkung.

(30) Priorität: **17.04.84 CH 1946/84**

(43) Veröffentlichungstag der Anmeldung: **18.12.85 Patentblatt 85/51**

(45) Bekanntmachung des Hinweises auf die Patenterteilung: **14.09.88 Patentblatt 88/37**

(84) Benannte Vertragsstaaten: **BE CH DE FR GB IT LI NL**

(56) Entgegenhaltungen:
**EP - A - 0 073 040**
**US - A - 3 941 830**

(73) Patentinhaber: **CIBA-GEIGY AG, Klybeckstrasse 141, CH-4002 Basel (CH)**

(72) Erfinder: **Diel, Peter J. Dr., Kornfeldstrasse 73, CH-4125 Riehen (CH)**
Erfinder: **Maier, Ludwig, Dr., Im Lee 28, CH-4144 Arlesheim (CH)**

**EP 0 165 203 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Phosphon- und Phosphinsäurederivate mit herbizider Wirkung, deren Salze, Verfahren zu deren Herstellung, sie als Wirkstoff enthaltende Mittel sowie deren Verwendung zur selektiven Bekämpfung von Unkräutern.

Die neuen Phosphon- und Phosphinsäurederivate entsprechen der Formel I

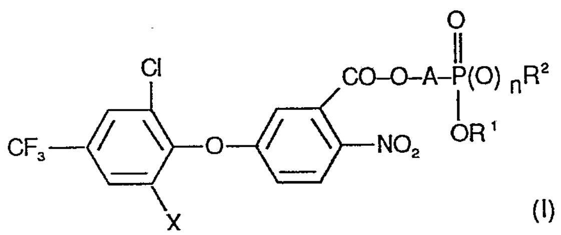

(I)

worin

X Wasserstoff oder Chlor

n Null oder 1

$R^1$ und $R^2$ unabhängig voneinander je Wasserstoff, $C_1$-$C_4$-Alkyl, $C_3$-$C_4$-Alkenyl, $C_1$-$C_4$-Halogenalkyl, $C_1$-$C_4$-Alkoxy-$C_1$-$C_4$-alkyl, $C_1$-$C_4$-Cyanoalkyl, einen Phenyl-, Phenyl-$C_1$-$C_4$-alkyl- oder Naphthylrest, welcher unsubstituiert oder 1- bis 2fach durch Halogen, $C_1$-$C_4$-Alkyl, $C_1$-$C_4$-Alkoxy, $C_1$-$C_4$-Halogenalkyl, $C_1$-$C_4$-Halogenalkoxy, Nitro oder Cyan substituiert ist und A eine $C_1$-$C_3$-Alkylkette, die 1- bis 2fach durch $C_1$-$C_2$-Alkyl und/oder Phenyl substituiert sein kann, bedeuten, mit der Massgabe, dass $R^2$ nicht Wasserstoff bedeutet, wenn n = 0 ist.

In diesen Definitionen sind unter Halogen Fluor-, Chlor-, Brom- oder Iodatome zu verstehen. Chlor und Brom sind bevorzugt.

Alkylreste, welche für sich allein stehen oder welche Teile eines kombinierten Alkylesters sind, können geradkettig oder verzweigt sein und enthalten die gegebene Anzahl Kohlenstoffatome. Als Beispiele seien folgende Reste genannt: Methyl, Ethyl, n-Propyl, Isopropyl, n-Butyl, sek. Butyl, tert. Butyl und Isobutyl.

Bei den in der obigen Definition von $R^1$ und $R^2$ erwähnten $C_3$-$C_4$-Alkenyl- oder $C_3$-$C_4$-Alkinylresten handelt es sich ebenfalls um geradkettige oder verzweigte Reste, wobei als Alkenylgruppen insbesondere 2-Propenyl (Allyl), 2-Methyl-2-propenyl (Methallyl), 1-Methyl-2-propenyl, 2-Butenyl und 3-Butenyl und als Alkinylreste 2-Propinyl (Propargyl), 2-Butinyl und 3-Butinyl zu nennen sind. Insbesondere bedeuten $R^1$ und $R^2$ als Alkenylreste Allyl, Methallyl oder 2-Butenyl und als Alkinylreste insbesondere Propargyl und 2-Butinyl.

Die Phosphon- und Phosphinsäurederivate der Formel I sind neu und zeichnen sich durch eine gute selektiv-herbizide Wirkung aus. Sie eignen sich zur Bekämpfung von mono- und vor allem dikotylen Unkräutern im Vor- und im Nachauflaufverfahren in diversen Nutzpflanzenkulturen wie z.B. Getreide, Mais, Reis und Soja.

Besonders vorteilhaft haben sich dabei diejenigen Phosphon- und Phosphinsäurederivate der Formel I erwiesen, in denen

- X Wasserstoff bedeutet
- die Phosphonsäurederivate der Formel I, in denen X Wasserstoff, n die Zahl 1, während A $R^1$ und $R^2$ die unter Formel I gegebenen Definitionen haben
- die Phosphinsäurederivate der Formel I, in denen X Wasserstoff, n Null, $R_1$ die unter Formel I gegebene Definition und $R^2$ $C_1$-$C_4$-Alkyl oder einen Phenyl-, oder Naphthylrest, der unsubstituiert oder 1- bis 2fach oder durch Halogen, $C_1$-$C_4$-Alkyl, $C_1$-$C_4$-Alkoxy, $C_1$-$C_4$-Halogenalkyl, $C_1$-$C_4$-Halogenalkoxy, Nitro oder Cyan substituiert ist, bedeuten;

insbesondere folgende Verbindungen:

2-Nitro-5-(2-chlor-4-trifluoromethyl-phenoxy)-benzoesäure-0,0-diethylphosphonyl-methylester,
2-Nitro-5-(2-chlor-4-trifluoromethyl-phenoxy)-benzoesäure-methyl-0-ethyl-phosphinyl-methylester,
2-Nitro-5-(2-chlor-4-trifluoromethyl-phenoxy)-benzoesäure-dihydroxy-phosphonyl-methylester,
2-Nitro-5-(2-chlor-4-trifluoromethyl-phenoxy)-benzoesäure-dihydroxy-phosphonyl-methylester-isopropylaminsalz,
2-Nitro-5-(2-chlor-4-trifluoromethyl-phenoxy)-benzoesäure-0,0-diisopropyl-phosphonyl-methylester,
2-Nitro-5-(2-chlor-4-trifluoromethyl-phenoxy)-benzoesäure-0,0-dimethyl-phosphonyl-methylester,
2-Nitro-5-(2-chlor-4-trifluoromethyl-phenoxy)-benzoesäure-0,0-di-n-butyl-phosphonyl-methylester,
2-Nitro-5-(2-chlor-4-trifluoromethyl-phenoxy)-benzoesäure-methyl-0-isopropyl-phosphinyl-methylester,
2-Nitro-5-(2-chlor-4-trifluoromethyl-phenoxy)-benzoesäure-ethyl-0-ethyl-phosphinyl-methylester,
2-Nitro-5-(2-chlor-4-trifluoromethyl-phenoxy)-benzoesäure-0,0-dimethyl-phosphonyl-ethylester,
2-Nitro-5-(2-chlor-4-trifluoromethyl-phenoxy)-benzoesäure-dihydroxy-phosphonyl-ethylester-isopropylaminsalz,
2-Nitro-5-(2-chlor-4-trifluoromethyl-phenoxy)-benzoesäure-0,0-dimethyl-phosphonyl-propylester,
2-Nitro-5-(2-chlor-4-trifluoromethyl-phenoxy)-benzoesäure-dihydroxy-phosphonyl-propylester-isopropylaminsalz.

Herbizid wirkende Verbindungen mit ähnlichem chemischen Aufbau sind bekannt. Aus der US-Patentschrift No. 3 928 416 ist die 2-Nitro-5-(2-chlor-4-trifluoromethyl-phenoxy)-benzoesäure bekannt. Sie besitzt herbizide Wirkung, ist jedoch ziemlich phytotoxisch. Im US-Patent 3 941 830 sind ferner 2-Nitro-5-(2-chlor-4-trifluoromethyl-phenoxy)-benzoesäureester mit herbizider Wirkung beschrieben. Die EP-A 73 040 be-

schreibt α-[4-(2,4-Dichlorphenoxy-, 4-Trifluoromethylphenoxy- und 5-Trifluoromethylpyridyl-2-oxy)-phenoxy]propionsäure-phosphonyl- und phosphinyl-methylester mit herbizider Wirkung. Die EP-A 78 536 schliesslich beschreibt z.B. herbizid wirkende 2-Nitro-5-(2-chlor-4-trifluoromethylphenoxy)-phenoxymethyl-phosphonic und phosphinic-acids und esters. Diese Verbindungen vermögen in ihrer Wirkung oft nicht oder nur teilweise zu befriedigen.

Die Herstellung der neuen Phosphon- und Phosphinsäurederivate der Formel I, Anspruch 1 geschieht in an sich bekannter Weise indem man 2-Nitro-5-(2-chlor-4-trifluoromethylphenoxy)-benzoesäure bzw. das Säurehalogenid oder einen reaktionsfähigen Ester davon der Formel II

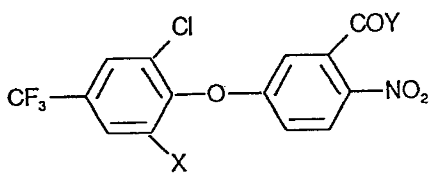

(II)

worin
X Wasserstoff oder Chlor
Y Hydroxyl, $C_1$-$C_4$-Alkoxy oder Halogen bedeutet

in einem inerten organischen Lösungsmittel, gegebenenfalls in Gegenwart der äquimolaren Menge einer Base oder eines wasserbindenden Mittels, bei einer Temperatur zwischen −20°C und dem Siedepunkt des Reaktionsgemisches, mit einem Phosphin- oder Phosphonsäurederivat der Formel III umsetzt,

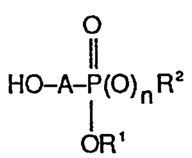

(III)

worin A n, $R^1$ und $R^2$ die oben gegebene Bedeutung haben und das Kondensationsprodukt aus dem Reaktionsgemisch isoliert.

Die Umsetzung wird vorteilhaft in einem inerten Lösungsmittel durchgeführt. Dabei kommen als inerte Lösungsmittel aromatische Kohlenwasserstoffe wie Benzol, Toluol oder Xylol, und ferner Äther, wie Diäthyläther, Tetrahydrofuran und Dioxan, in Betracht. Die Verwendung von aromatischen Kohlenwasserstoffen empfiehlt sich vor allem dann, wenn bei der Umsetzung Wasser entsteht, das aus dem Reaktionsgemisch entfernt werden muss.

Die Reaktionstemperatur kann in weiten Grenzen variiert werden. Geeignete Reaktionstemperaturen liegen beispielsweise zwischen −20°C und der Rückflusstemperatur des Reaktionsgemisches. Vorzugsweise wird die Umsetzung bei einer Temperatur zwischen Raumtemperatur (20°C) und 70°C durchgeführt.

Bei der Umsetzung einer Verbindung der Formel II, in welcher Y die Hydroxygruppe darstellt, wird vorteilhaft entweder in Gegenwart von wasserfreiem Zinkchlorid oder starker Schwefelsäure gearbeitet, oder die Umsetzung wird in Gegenwart einer katalytischen Menge einer starken Säure, wie Schwefelsäure oder p-Toluolsulfonsäure, bei Rückflusstemperatur in einem aromatischen Kohlenwasserstoff, wie Benzol, Toluol oder Xylol als Lösungsmittel unter azeotroper Auskreisung des entstandenen Wassers durchgeführt. Ferner kann die Umsetzung vorteilhaft in Gegenwart eines wasserbindenden Mittels, wie N,N'-Dicyclohexylcarbodiimid, durchgeführt werden.

Die Umsetzung von Verbindungen der Formel II, in welcher Y eine $C_1$-$C_4$-Alkoxygruppe ist, wird vorteilhaft bei Rückflusstemperatur in einem der vorgenannten Lösungsmittel in Gegenwart einer katalytischen Menge einer starken Säure, beispielsweise Schwefelsäure oder p-Toluolsulfonsäure, durchgeführt.

Für die Umsetzung einer Verbindung der Formel II, in welcher Y ein Halogenatom bedeutet, kommen insbesondere die Säurechloride (Y = Cl) in Betracht. Diese Umsetzung findet vorteilhaft in Gegenwart der mindestens äquivalenten Menge einer Base als säurebindendes Mittel statt, wobei als Base anorganische Basen, wie Alkalimetall- und Erdalkalimetallcarbonate und -hydrogencarbonate, und organische Basen, wie tertiäre Amine, beispielsweise Triäthylamin, und Pyridin in Betracht kommen.

2-Nitro-5-(2-chlor-4-trifluoromethyl-phenoxy)-benzoesäure und ihre Derivate sind bekannt, z.B. aus den Patentschriften US 3 979 437, US 3 928 416, 3 784 635.

Sie werden hergestellt durch Umsetzen eines 5-Hydroxy-2-nitrobenzoesäurederivates mit 1,2-Dichlor-4-trifluormethylbenzol in einem inerten organischen Lösungsmittel in Gegenwart einer Base.

Von den Ausgangsverbindungen der Formel III ist bereits eine grosse Zahl einschliesslich ihrer Herstellung in der Literatur beschrieben worden. Die bisher nicht beschriebenen Verbindungen der Formel III können in analoger Weise hergestellt werden. So können Verbindungen der Formel III, in welchen A eine gegebenenfalls durch $C_1$-$C_2$-Alkyl oder Phenyl 1- bis 2fach substituierte Methylengruppe darstellt, in besonders geeigneter Weise durch Umsetzung eines Phosphon- bzw. Phosphonigsäureesters mit einer geeigneten Carbonylverbindung nach Gleichung 2 erhalten werden:

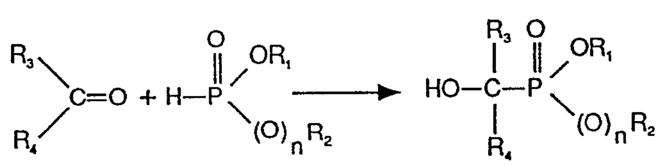

(2)

In Gleichung 2 bedeuten $R_3$ und $R_4$ unabhängig voneinander je Wasserstoff, $C_1$-$C_2$-Alkyl oder Phenyl und $R_1$, $R_2$ und n haben die unter Formel I angegebene Bedeutung.

Umsetzungen dieser Art werden beispielsweise in «Organic Phosphorus Compounds» (John Wiley & Sons, New York), Vol. 6, Seite 26 und Vol. 7, Seite 30, sowie in J. Gen. Chem. 46, 1389 (1946) beschrieben.

Verbindungen der Formel III, in welcher A eine durch einen Substituenten aus der Gruppe $C_1$-$C_2$-Alkyl und Phenyl 1- bis 2fach substituierte 1,2-Äthylen- bzw. 1,3-Propylengruppe darstellt, können gemäss Gleichung 3 durch Addition eines Phosphon- bzw. Phosphonigsäureesters an einen Carbonsäurevinylester oder gemäss Gleichung 4 durch Addition eines Phosphon- bzw. Phosphonigsäureesters an einem Carbonsäureallylester und anschliessende Hydrolyse bzw. Alkoholyse des zunächst erhaltenen 2-Acyloxyäthyl- bzw. 3-Acyloxypropylphosphonats bzw. -phosphinats hergestellt werden.

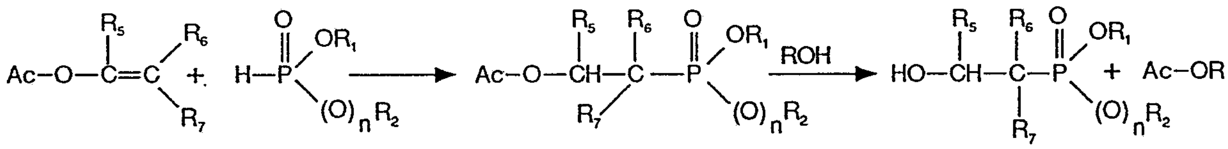


(3)

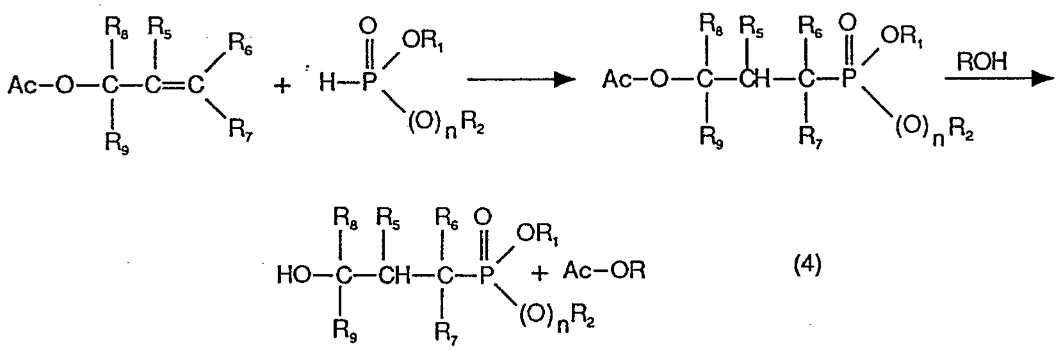


(4)

In Gleichungen 3 und 4 bedeuten die Reste $R_5$, $R_6$, $R_7$, $R_8$ und $R_9$ jeweils Wasserstoff, $C_1$-$C_2$-Alkyl oder Phenyl, wobei jedoch im Einzelfall höchstens 2 dieser Reste eine andere Bedeutung haben können als Wasserstoff. $R_1$, $R_2$ und n haben die unter Formel I angegebene Bedeutung, Ac steht für den Acylrest einer Carbonsäure, vorzugsweise Essigsäure, und R bedeutet Wasserstoff, Natrium, Kalium oder $C_1$-$C_4$-Alkyl. Solche Umsetzungen sind beispielsweise in «Organic Phosphorus Compounds» (John Wiley & Sons, New York) Vol. 6, Seite 34 und Vol. 7, Seite 28, sowie in J. Amer. Chem. Soc. 77, 6225 (1955) und ibid. 81, 6275 (1959) beschrieben.

Ferner können Verbindungen der Formel III, in welchen A eine gegebenenfalls durch $C_1$-$C_2$-Alkyl und Phenyl 1- bis 2fach substituierte 1,2-Äthylen- bzw. 1,3-Propylengruppe darstellt, nach Gleichung 5 durch Michaelis-Arbusow-Reaktion von Phosphiten und Phosphoniten mit entsprechenden 2-Halogenäthyl- bzw. 3-Halogenpropylestern von Carbonsäuren und anschliessende Hydrolyse bzw. Alkoholyse der entsprechenden 2-Acyloxyäthyl- bzw. 3-Acyloxypropylphosphonate bzw. -phosphinate hergestellt werden.

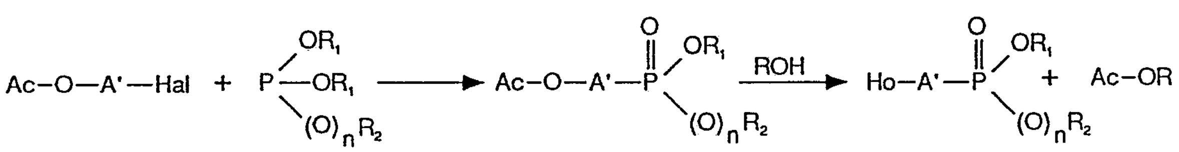


(5)

In Gleichung 5 haben $R_1$, $R_2$ und n die unter Formel I angegebene Bedeutung, A' steht für eine 1,2-Äthylen- oder 1,3-Propylengruppe, die durch einen Substituenten aus der Gruppe $C_1$-$C_2$-Alkyl und Phenyl 1- bis 2fach substituiert sein kann, Ac stellt den Acylrest einer Carbonsäure dar und R bedeutet Wasserstoff, Natrium, Kalium oder $C_1$-$C_4$-Alkyl. Solche Umsetzungen sind beispielsweise in «Organic Phosphorus Compounds» (John Wiley & Sons, New York) Vol. 6, Seite 14 und Vol. 7, Seite 23, sowie in J. Amer. Chem. Soc. 78, 6025 (1956) beschrieben. Ferner sei in diesem Zusammenhang auf die deutsche Offenlegungsschrift 2 226 406 verwiesen.

Die vorliegende Erfindung schliesst auch die Herstellung agrochemischer Mittel ein.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl, oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden.

Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von granulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali oder gegebenenfalls substituierte Ammoniumsalze von höheren Fettsäuren ($C_{10}$-$C_{22}$), wie z.B. die Na- oder K-Salze der Öl oder Stearinsäure, oder von natürlichen Fettsäuregemischen, die z.B. aus Kokosnuss- oder Talgöl gewonnen werden können, genannt. Ferner sind auch die Fettsäuremethyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14-)-Äthylenoxid-Adduktes oder Phospholipide in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol, Äthylendiaminopolypropylenglykol und Alkylpolypropylenglykol mit 1 bis 10 Kohlenstoffatomen in der Alkylkette, die genannten Verbindungen enthalten üblicherweise pro Propylenglykol-Einheit 1 bis 5 Äthylenglykol-Einheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

«Mc Cutcheon's Detergents and Emulsifiers Annual» MC Publishing Corp., Ridgewood, New Jersey, 1979. M. and J. Ash. «Encyclopedia of Surfactants», Vol. I-III, Chemical Publishing Co.,

New York, 1980–1981. H. Stache, «Tensid-Taschenbuch», 2. Aufl., C. Hanser Verlag, München, Wien, 1981.

Die agrochemischen Zubereitungen enthalten in der Regel 0,1 bis 99%, insbesondere 0,1 bis 95% Wirkstoff der Formel I, 1 bis 99% eines festen oder flüssigen Zusatzstoffes und 0 bis 25%, insbesondere 0,1 bis 25% eines Tensides.

Insbesondere setzen sich bevorzugte Formulierungen folgendermassen zusammen: (% = Gewichtsprozent).

Lösungen
Aktiver Wirkstoff: 5 bis 95%, vorzugsweise 10 bis 80%
Lösungsmittel: 95 bis 5%, vorzugsweise 90 bis 0%
oberflächenaktives Mittel: 1 bis 30%, vorzugsweise 2 bis 20%

Emulgierbare Konzentrate:
Aktiver Wirkstoff: 10 bis 50%, bevorzugt 10 bis 40%
oberflächenaktive Mittel: 5 bis 30%, vorzugsweise 10 bis 20%
flüssiges Trägermittel: 20 bis 95%, vorzugsweise 40 bis 80%

Stäube:
Aktiver Wirkstoff: 0,5 bis 10%, vorzugsweise 2 bis 8%
festes Trägermittel: 99,5 bis 90%, vorzugsweise 98 bis 92%

Suspensions-Konzentrate:
Aktiver Wirkstoff: 5 bis 75%, vorzugsweise 10 bis 50%
Wasser: 94 bis 25%, vorzugsweise 90 bis 30%
oberflächenaktives Mittel: 1 bis 40%, vorzugsweise 2 bis 30%

Benetzbares Pulver:
Aktiver Wirkstoff: 5 bis 90%, vorzugsweise 1 bis 80%
und insbesondere 20 bis 60%
oberflächenaktives Mittel: 0,5 bis bis 20%, vorzugsweise 1 bis 15%
festes Trägermittel: 5 bis 90%, vorzugsweise 30 bis 70%

Granulate:
Aktiver Wirkstoff: 0,5 bis 30%, vorzugsweise 3 bis 15%
festes Trägermittel: 99,5 bis 70%, vorzugsweise 97 bis 85%.

Während als Handelsware eher konzentrierte Mittel bevorzugt werden, verwendet der Endverbraucher in der Regel verdünnte Mittel. Die Anwendungsformen können bis hinab zu 0,001% an Wirkstoff verdünnt werden.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Derartige agrochemische Mittel sind ein Bestandteil der vorliegenden Erfindung.

Die nachfolgenden Beispiele dienen zur näheren Erläuterung der Erfindung, ohne dieselbe zu beschränken. Temperaturen sind in Celsiusgraden angegeben.

Beispiel 1

Herstellung von 2-Nitro-5-(2-chlor-4-trifluormethylphenoxy)-benzoesäure-0,0-diethylphosphonyl-methylester

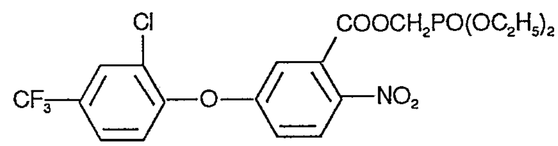

4,4 g (0,026 ml) Hydroxymethyl-0,0-diethylphosphonat, 3,7 ml (0,026 Mol) Triethylamin und 0,3 g 4-Piperidinopyridin werden in 100 ml Tetrahydrofuran vorgelegt. Bei Raumtemperatur und unter Rühren lässt man 10 g (0,026 Mol) 2-Nitro-5-(2-chlor-4-trifluormethyl-phenoxy)-benzoylchlorid in 50 ml Tetrahydrofuran gelöst langsam zutropfen. Die Reaktion ist exotherm und Triethylammonium-Hydrochlorid fällt aus. Man rührt 1 Stunde bei 37° und 1 Stunde bei 70° nach, lässt abkühlen und nutscht das Salz ab. Das Filtrat wird am Rotationsverdampfer eingeengt und anschliessend am Hochvakuum getrocknet. Die 16,2 g Öl, welche als Rückstände verbleiben, werden mit $CH_2CH_2$/MeOH 95:5 über Kieselgel chromatografiert.

Ausbeute: 11,4 g Öl (85% der Theorie) $n_D^{20}$: 1,5236.

Beispiel 2

Herstellung von 2-Nitro-5-(2-chlor-4-trifluoromethylphenoxy)-benzoesäure-methyl-ethyl-phospinyl-methylester.

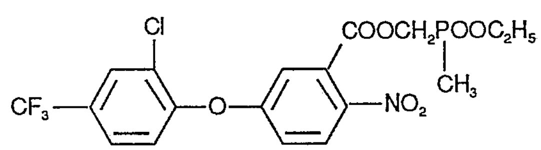

10 g (0,072 Mol) Hydroxymethyl-methyl-0-ethylphosphinat, 10 ml (0,072 Mol) Triethylamin und 0,5 g 4-Piperidinopyridin werden in 150 ml Toluol vorgelegt. Unter Rühren werden 27,5 g (0,072 Mol) 2-Nitro-5-(2-chlor-4-trifluormethylphenoxy)-benzolchlorid in 50 ml Toluol gelöst zugetropft. Die Temperatur steigt auf 50°C und Triäthylamin-Hydrochlorid fällt aus. Man rührt 1 Stunde bei 50° und 1 Stunde bei 70° aus, nutscht und engt das Filtrat am Rotationsverdampfer ein. Das verbleibende Öl (37 g) wird am Hockvakuum bei 50°C getrocknet und dann mit

$CH_2Cl_2/MeOH$ 95:5 über Kieselgel chromatografiert.

Ausbeute: 26,1 g (75% der Theorie) $n_D^{20}$:1,5350.

Beispiel 3

Herstellung von 2-Nitro-5-(2-chlor-4-trifluoromethylphenoxy)-benzoesäure-dihydroxyphosphonyl-methylester

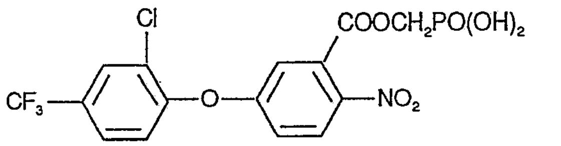

5 g (0,0093 Mol) 2-Nitro-5-(2-chlor-4-trifluormethyl-phenoxy)-benzoesäure-0,0-diisopropylphosphonyl-methylester werden in 100 ml Chloroform vorgelegt. Bei Raumtemperatur tropft man unter Rühren 3,75 ml (0,0278 Mol) Trimethylbromsilan zu. Nach 2 Stunden Rühren bei 70° und Nachrühren über Nacht bei Raumtemperatur wird das Chloroform am Rotationsverdampfer entfernt und das zurückbleibende Öl am Hochvakuum getrocknet. Das Öl wird in Ethanol verrührt und die gelbe Lösung am Rotationsverdampfer erneut eingeengt und anschliessend bei 0,2 mbar und 50°C getrocknet. Die freie Säure wird in Ethanol unter Zugabe von 2,5 Aequivalent Isopropylamin in das Salz übergeführt.

Ausbeute: 2,1 g Schmelzpunkt = 10°C Zers, (sintert bei 96°-100°).

In analoger Weise zu diesen Beispielen werden folgende Verbindungen hergestellt:

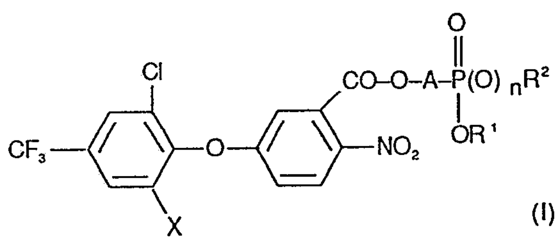

(I)

Tabelle 1

| No. | A | $R^1$ | $R^2$ | n | X | physikalische Daten |
|---|---|---|---|---|---|---|
| 1.01 | $CH_2$ | $C_2H_5$ | $C_2H_5$ | 1 | H | $n_D^{20}$ 1.5236 |
| 1.02 | $CH_2$ | $C_2H_5$ | $CH_3$ | O | H | $n_D^{20}$ 1.5350 |
| 1.03 | $CH_2$ | H | H | 1 | H | Isopropylamin-Salz Smp. 105°Z |
| 1.04 | $CH_2$ | $C_3H_7$iso | $C_3H_7$iso | 1 | H | $n_D^{20}$ 1.5131 |
| 1.05 | $CH_2$ | $CH_3$ | $CH_3$ | 1 | H | $n_D^{20}$ 1.5315 |
| 1.06 | $CH_2$ | $C_4H_9$n | $C_4H_9$n | 1 | H | $n_D^{20}$ 1.5040 |
| 1.07 | $CH_2$ | $C_3H_7$iso | $CH_3$ | O | H | $n_D^{20}$ 1.5243 |
| 1.08 | $CH_3$ | $C_2H_5$ | $C_2H_5$ | O | H | Analyse: |
| | ber C 46,03 % H 3,66 % F 11,5 % N 2,82 % P 6,25 % | | | | | |
| | gef C 45,2 % H 3,6 % F 11,1 % N 2,8 % P 6,3 % | | | | | |
| 1.09 | $CH_3$ | H | $CH_3$ | O | H | Isopropylaminsalz Smp. 58° Z |
| 1.10 | $CHCH_3$ | $CH_3$ | $CH_3$ | 1 | H | Smp. 117–119° |
| 1.11 | $CH(C_2H_5)$ | $CH_3$ | $CH_3$ | 1 | H | Öl |
| 1.12 | $CHCH_3$ | $C_2H_5$ | $CH_3$ | 1 | H | Öl |
| 1.13 | $CHCH_3$ | $CH_3$ | $CH_3$ | 1 | H | $n_D^{20}$ 1.5278 |
| 1.14 | $CH_2CH_2$ | $CH_3$ | $CH_3$ | 1 | H | $n_D^{20}$ 1.5320 |
| 1.15 | $CH_1CH_2CH_2$ | H | H | 1 | H | Isopropylaminsalz Smp. 40–50° |
| 1.16 | $CH_2CH_2$ | H | H | 1 | H | Isopropylaminsalz Smp. 48–53 |

Formulierungsbeispiele

Beispiel 4

Formulierungsbeispiele für flüssige Wirkstoffe der Formel I (% = Gewichtsprozent)

| a) Emulsionskonzentrate | a) | b) | c) |
|---|---|---|---|
| Wirkstoff gemäss Tabelle 1 | 20% | 40% | 50% |
| Ca-Dodecylbenzolsulfonat | 5% | 8% | 5,8% |
| Ricinusöl-polyäthylenglykoläther (36 Mol AeO) | 5% | - | - |
| Tributylphenoyl-polyäthylenglykoläther (30 Mol AeO) | - | 12% | 4,2% |
| Cyclohexanon | - | 15% | 20% |
| Xylolgemisch | 70% | 25% | 20% |

Aus solchen Konzentraten können durch Verdünnen mit Wasser Emulsionen jeder gewünschten Konzentration hergestellt werden.

| b) Lösungen | a) | b) | c) | d) |
|---|---|---|---|---|
| Wirkstoff gemäss Tabelle 1 | 80% | 10% | 5% | 95 |
| Äthylenglykol-monomethyläther | 20% | - | - | - |
| Polyäthylenglykol MG 400 | - | 70% | - | - |
| N-Methyl-2-pyrrolidon | - | 20% | - | - |
| Epoxidiertes Kokosnussöl | - | - | 1% | 5%- |
| Benzin (Siedegrenzen 160–190°C) | - | - | 94% | - |

Die Lösungen sind zur Anwendung in Form kleinster Tropfen geeignet.

| c) Granulate | a) | b) |
|---|---|---|
| Wirkstoff gemäss Tabelle 1 | 5% | 10% |
| Kaolin | 94% | - |
| Hochdisperse Kieselsäure | 1% | - |
| Attapulgit | - | 90% |

Der Wirkstoff wird in Methylenchlorid gelöst, auf den Träger aufgesprüht und das Lösungsmittel anschliessend im Vakuum abgedampft.

| d) Stäubemittel | a) | b) |
|---|---|---|
| Wirkstoff gemäss Tabelle 1 | 2% | 5% |
| Hochdisperse Kieselsäure | 1% | 5% |
| Talkum | 97% | - |
| Kaolin | - | 90% |

Durch inniges Vermischen der Trägerstoffe mit dem Wirkstoff erhält man gebrauchsfertige Stäubemittel.

Beispiel 5

Formulierungsbeispiele für feste Wirkstoffe der Formel I (% = Gewichtsprozent)

| a) Spritzpulver | a) | b) |
|---|---|---|
| Wirkstoff gemäss Tabelle 1 | 20% | 60% |
| Na-Ligninsulfonat | 5% | 5% |
| Na-Laurylsulfat | 3% | - |
| Na-Diisobutylnaphthalinsulfonat | - | 6% |
| Octylphenpolpolyäthylenglykoläther (7–8 Mol AeO) | - | 2% |
| Hochdisperse Kieselsäure | 5% | 27% |
| Kaolin | 67% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | |
|---|---|
| Wirkstoff gemäss Tabelle 1 | 10% |
| Octylphentolpolyäthylenglykoläther (4–5 Mol AeO) | 3% |
| Ca-Dodecylbenzolsulfonat | 3% |
| Ricinusölpolyglykoläther (36 Mol AeO) | 4% |
| Cyclohexan | 30% |
| Xylolgemisch | 50% |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff gemäss Tabelle 1 | 5% | 8% |
| Talkum | 95% | - |
| Kaolin | - | 92% |

Man erhält anwendungsfertige Stäubemittel, indem der Wirkstoff mit dem Träger vermischt und auf einer geeigneten Mühle vermahlen wird.

| d) Extruder-Granulat | |
|---|---|
| Wirkstoff gemäss Tabelle 1 | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | |
|---|---|
| Wirkstoff gemäss Tabelle 1 | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | |
|---|---|
| Wirkstoff gemäss Tabelle 1 | 40% |
| Äthylenglykol | 10% |

| | |
|---|---|
| Nonylphenolpolyäthylenglykoläther (15 Mol AeO) | 6% |
| Na-Kigninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat aus welchem durch Verdünnen mit Wasser Suspensionen jeder gewünschten Konzentration hergestellt werden können.

Biologische Beispiele

Die selektiv-herbizide Wirkung wurde im Gewächshaus anhand verschiedener Pflanzenversuche nachgewiesen. Die Wirkung der Verbindung No. 5 wurde dabei mit derjenigen des 4-(5-Trifluoromethylpyridyl-2-oxy)phenoxypropionsäure-0,0-diisopropyl-phosphonyl-methylesters, der Formel

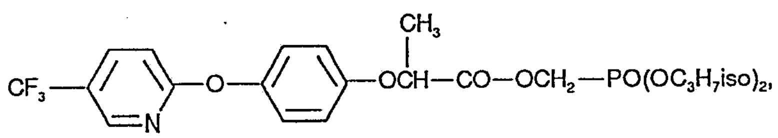

welcher aus der EP-A 73 040 bekannt ist, verglichen (Verbindung A).

Beispiel 6

Vorlaufversuch

Im Gewächshaus werden Pflanzensamen in Töpfe von 11 cm Durchmesser gesät, so dass sich pro Topf 12–30 Pfänzchen entwickeln können. Unmittelbar nach der Einsaat wird die Erdoberfläche mit einer wässrigen Emulsion der zu prüfenden Substanz, welche durch Verdünnen eines Emulsionskonzentrates mit Wasser erhalten wird, gespritzt. Es werden verschiedene Konzentrationen angewendet und die Menge Wirkstoff wird in kg pro Hektar ausgerechnet. Die Töpfe werden dann im Gewächshaus bei 22 bis 25° und 50 bis 70% relativer Luftfeuchtigkeit gehalten und regelmässig bewässert. Der Versuch wird nach 3 Wochen ausgewertet und der Zustand der Pflanzen gemäss folgender Notenskala notiert.

1 Pflanze hat nicht gekeimt oder ist eingegangen
2–3 sehr starke Schäden
4 starke Schäden
5 mittlere Schäden, die Pflanze ist verkümmert
6 Schäden, die Pflanze kann regenerieren
7–8 leichte Schäden
9 normales Wachstum, wie das unbehandelter Pflanzen

Die Resultate sind in der Tabelle 2 zusammengefasst.

Tabelle 2

| Verbindung | No. 5 | | | | A | | | |
|---|---|---|---|---|---|---|---|---|
| Aufwandmenge in kg/ha | 4 | 2 | 1 | 1/2 | 4 | 2 | 1 | 1/2 |
| Pflanze | | | | | | | | |
| Weizen | 6 | 7 | 9 | 9 | 1 | 1 | 1 | 5 |
| Mais | 4 | 4 | 8 | 9 | 1 | 1 | 1 | 1 |
| Soja | 7 | 8 | 9 | 9 | 9 | 9 | 9 | 9 |
| Baumwolle | 6 | 8 | 9 | 9 | 9 | 9 | 9 | 9 |
| Echinochloa crus galli | 3 | 5 | 8 | 9 | 1 | 1 | 1 | 1 |
| Abutilon | 3 | 5 | 7 | 9 | 9 | 9 | 9 | 9 |
| Chenopodium sp | 1 | 1 | 1 | 5 | 9 | 9 | 9 | 9 |
| Sinapis alba | 1 | 1 | 1 | 7 | 8 | 8 | 9 | 9 |
| Galium aparine | 2 | 3 | 8 | 9 | 9 | 9 | 9 | 9 |
| Viola tricolor | 1 | 1 | 1 | 4 | 9 | 9 | 9 | 9 |
| Beta vulgaris | 1 | 1 | 1 | 4 | 9 | 9 | 9 | 9 |

Beispiel 7

Nachlaufversuch

Verschiedene Kulturpflanzen und Unkräuter werden aus den Samen in Töpfen im Gewächshaus aufgezogen, bis sie das 4- bis 6-Blatt-Stadium erreicht haben. Dann werden die Pflanzen mit wässrigen Wirkstoffemulsionen gespritzt, die 125 bis 1000 g pro Hektar entsprechen. Die behandelten Pflanzen werden dann bei optimalen Bedingungen von Licht, Temperatur (22–25°) und Luftfeuchtigkeit (50–70% relativ) und regelmässigem Bewässern gehalten. 15 Tage nach der Behandlung erfolgte die Auswertung der Versuche nach oben gegebenem Index. Die Ergebnisse sind in der Tabelle 3 zusammengefasst:

Tabelle 3

| Verbindung | No. 5 | | | | A | | | |
|---|---|---|---|---|---|---|---|---|
| Aufwandmenge g/ha | 1000 | 500 | 250 | 125 | 1000 | 5000 | 250 | 125 |
| Pflanze | | | | | | | | |
| Weizen | 7 | 8 | 8 | 9 | 3 | 4 | 4 | 7 |
| Mais | 4 | 5 | 7 | 8 | 1 | 2 | 4 | 4 |
| Soja | 6 | 7 | 7 | 7 | 9 | 9 | 9 | 9 |
| Echinochloa crus galli | 2 | 2 | 4 | 5 | 1 | 1 | 3 | 4 |
| Cyperus esc. | 2 | 2 | 4 | 5 | 9 | 9 | 9 | 9 |
| Abutilon sp. | 1 | 1 | 3 | 4 | 9 | 9 | 9 | 9 |
| Xanthium sp. | 1 | 1 | 2 | 3 | 9 | 9 | 9 | 9 |
| Chenopodium sp. | 2 | 2 | 2 | 3 | 9 | 9 | 9 | 9 |
| Ipomoea purp. | 1 | 1 | 1 | 2 | 9 | 9 | 9 | 9 |
| Sinapis alba | 1 | 1 | 1 | 1 | 7 | 8 | 9 | 9 |
| Galium aparine | 1 | 1 | 2 | 2 | 8 | 8 | 9 | 9 |
| Viola tricolor | 1 | 1 | 1 | 1 | 8 | 9 | 9 | 9 |
| Beta vulgaris | 1 | 2 | 3 | 4 | 7 | 8 | 8 | 9 |

Beispiel 8

Reisversuch

In einem weiteren Versuch wurde die Wirkung dieser Verbindungen im Nachauflaufverfahren auf junge im Wasser wachsende Reispflänzchen mit vergesellschafteten Unkrautflora geprüft.

Reispflänzchen, welche 25 Tage alt sind, wurden im Gewächshaus in grosse rechteckige Eternitschalen verpflanzt. Zwischen die Reihen der Reispflanzen wurden dann Samen der in Reiskulturen vorkommenden Unkräuter Echinochloa, Scirpus, Monocharia und Sagittaria gesät. Die Schalen wurden gut bewässert und bei einer Temperatur von ca. 25°C und hoher Luftfeuchtigkeit gehalten. Nach 12 Tagen, wenn die Unkräuter aufgelaufen sind und das 2 bis 3-Blattstadium erreicht haben, wurde die Erde in der Schale mit einer 2,5 m hohen Schicht Wasser bedeckt. Der Wirkstoff wurde dann als Emulsionskonzentrat mittels einer Pipette zwischen die Pflanzenreihen appliziert, wobei man das Emulsionskonzentrat so verdünnte und auftrug, dass es einer Applikationsmenge im Feld 2, 1, $^1/_2$ und $^1/_4$ kg Wirkstoff pro Hektar entsprach. Der Versuch wurde nach 4 Wochen ausgewertet und der Zustand der Pflanzen nach dem oben gegebenen Index aufgenommen. Die Resultate sind in der Tabelle 4 zusammengefasst.

Tabelle 4

| Verbindung | No. 5 | | | | A | | | |
|---|---|---|---|---|---|---|---|---|
| Aufwandmenge kg/ha | 2 | 1 | 1/2 | 1/4 | 2 | 1 | 1/2 | 1/4 |
| Reis | 5 | 6 | 6 | 7 | 2 | 2 | 5 | 8 |
| Echinochloa crus galli | 1 | 1 | 3 | 3 | 1 | 1 | 1 | 1 |
| Scirpus | 3 | 4 | 5 | 7 | 5 | 8 | 9 | 9 |
| Monocharia vag. | 3 | 3 | 4 | 4 | 6 | 9 | 9 | 9 |
| Sagittaria pyg. | 8 | 9 | 9 | 9 | 9 | 9 | 9 | 9 |

Die Wirkung der Verbindung A ist in diesen Versuchen spezifisch auf die monokotylen Pflanzen gerichtet.

**Patentansprüche**

1. Neue Phosphon- und Phosphinsäurederivate der Formel I

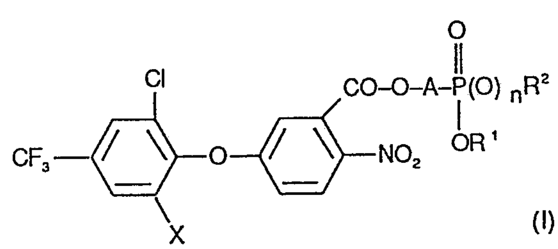

(I)

worin
X Wasserstoff oder Chlor
n Null oder 1
$R^1$ und $R^2$ unabhängig voneinander je Wasserstoff, $C_1$-$C_4$-Alkyl, $C_3$-$C_4$-Alkenyl, $C_3$-$C_4$-Alkinyl, $C_1$-$C_4$-Halogenalkyl, $C_1$-$C_4$-Alkoxy-$C_1$-$C_4$-alkyl, $C_1$-$C_4$-Cyanolalkyl, einen Phenyl-, Phenyl-$C_1$-$C_4$-alkyl- oder Naphthylrest welcher unsubstituiert oder 1- bis 2fach durch Halogen, $C_1$-$C_4$-Alkyl, $C_1$-$C_4$-Alkoxy, $C_1$-$C_4$Halogenalkyl,$C_1$-$C_4$-Halogenalkoxy, Nitro oder Cyan substituiert ist und A eine $C_1$-$C_3$-Alkylkette, die 1- bis 2fach durch $C_1$-$C_2$-Alkyl und/oder Phenyl substituiert sein kann, bedeuten, mit der Massgabe, dass $R^2$ nicht Wasserstoff bedeutet, wenn $n = 0$ ist.

2. Neue Phosphon- und Phosphinsäurederivate gemäss Anspruch 1, der Formel I, in denen X Wasserstoff bedeutet während n, $R^1$, $R^2$ und A die im Anspruch 1 gegebene Bedeutung haben.

3. Neue Phosphonsäurederivate gemäss Anspruch 1 der Formel I, in denen X Wasserstoff, n die Zahl 1 während A, $R^1$ und $R^2$ die im Anspruch 1 gegebene Bedeutung haben.

4. Neue Phosphinsäurederivate gemäss Anspruch 1 der Formel I, worin X Wasserstoff, n Null, $R^2$ $C_1$-$C_4$-Alkyl oder einen Phenyl- oder Naphthylrest der unsubstituiert oder durch Halogen, $C_1$-$C_4$-Alkyl, $C_1$-$C_4$-Alkoxy, $C_1$-$C_4$-Halogenalkyl, $C_1$-$C_4$-Halogenalkoxy, Nitro oder Cyan substituiert ist, bedeuten, während $R^1$ die im Anspruch 1 gegebene Bedeutung hat.

5. 2-Nitro-5-(2-chlor-4-trifluoromethyl-phenoxy)-benzoesäure-0,0-diethylphosphonyl-methylester gemäss Anspruch 1.

6. 2-Nitro-5-(2-chlor-4-trifluoromethyl-phenoxy)-benzoesäuremethyl-0-ethyl-phosphinyl-methylester gemäss Anspruch 1.

7. 2-Nitro-5-(2-chlor-4-trifluoromethyl-phenoxy)-benzoesäuredihydroxy-phosphonyl-methylester gemäss Anspruch 1.

8. 2-Nitro-5-(2-chlor-4-trifluoromethyl-phenoxy)benzoesäure-dihydroxy-phosphonylmethylester-isopropylaminsalz gemäss Anspruch 1.

9. 2-Nitro-5-(2-chlor-4-trifluoromethyl-phenoxy)-benzoesäure-0,0-diisopropyl-phosphonyl-methylester gemäss Anspruch 1.

10. 2-Nitro-5-(2-chlor-4-trifluoromethyl-phenoxy)-benzoesäure-0,0-dimethyl-phosphonyl-methylester gemäss Anspruch 1.

11. 2-Nitro-5-(2-chlor-4-trifluoromethyl-phenoxy)-benzoesäure-0,0-di-n-butyl-phosphonyl-methylester gemäss Anspruch 1.

12. 2-Nitro-5-(2-chlor-4-trifluoromethyl-phenoxy)-benzoesäure-methyl-0-isopropyl- phosphinyl-methylester gemäss Anspruch 1.

13. 2-Nitro-5-(2-chlor-4-trifluoromethyl-phenoxy)-benzoesäure-ethyl-0-ethyl-phosphinyl-methylester gemäss Anspruch 1.

14. 2-Nitro-5-(2-chlor-4-trifluoromethyl-phenoxy)-benzoesäure-0,0-dimethyl-phosphonyl-ethylester gemäss Anspruch 1.

15. 2-Nitro-5-(2-chlor-4-trifluoromethyl-phenoxy)-benzoesäure-dihydroxy-phosphonyl-ethyl-ester-isopropylaminsalz gemäss Anspruch 1.

16. 2-Nitro-5-(2-chlor-4-trifluoromethyl-phenoxy)-benzoesäure-0,0-dimethyl-phosphonyl-propylester gemäss Anspruch 1.

17. 2-Nitro-5-(2-chlor-4-trifluoromethyl-phenoxy)-benzoesäure-dihydroxy-phosphonyl-propylester-isopropylaminsalz gemäss Anspruch 1.

18. Verfahren zur Herstellung von Phosphon- und Phosphinsäurederivaten der Formel I, Anspruch 1, dadurch gekennzeichnet, dass man eine 2-Nitro-4-(2-chlor-4-trifluoromethylphenoxy)benzoesäure, das Säurehalogenid oder einen reaktionsfähigen Ester davon der Formel II

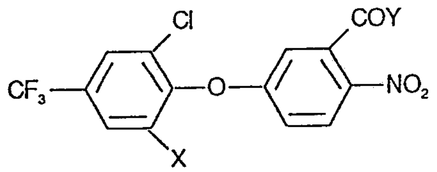

(II)

worin
X Wasserstoff oder Chlor
Y Hydroxyl, $C_1$-$C_4$-Alkoxy oder Halogen bedeutet in einem inerten organischen Lösungsmittel, gegebenenfalls in Gegenwart der äquimolaren Menge einer Base oder eines wasserbindenden Mittels, bei einer Temperatur zwischen −20°C und dem Siedepunkt des Reaktionsgemisches, mit einem Phosphin- oder Phosphonsäurederivat der Formel III umsetzt,

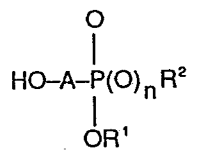

(III)

worin A, n, $R^1$ und $R^2$ die im Anspruch 1 gegebene Bedeutung haben und das Kondensationsprodukt aus dem Reaktionsgemisch isoliert.

19. Verfahren gemäss Anspruch 18, dadurch gekennzeichnet, dass Y die Hydroxylgruppe bedeutet und die Umsetzung in Gegenwart von Schwefelsäure oder am Wasserabscheider oder in Gegenwart eines wasserbindenden Mittels vorgenommen wird.

20. Verfahren gemäss Anspruch 18, dadurch gekennzeichnet, dass Y ein Halogenatom bedeutet und die Umsetzung in Gegenwart der äquimolaren Menge einer Base erfolgt.

21. Verfahren gemäss Anspruch 18, dadurch gekennzeichnet, dass Y eine $C_1$-$C_4$-Alkoxygruppe bedeutet und dass die Kondensation durch Kochen in einem inerten organischen Lösungsmittel gegebenenfalls in Gegenwart der katalytischen Menge einer Base oder Säure erfolgt.

22. Einherbizides Mittel, dadurch gekennzeichnet, dass es neben inerten Zutaten als Wirkstoff ein Phosphon- oder Phosphinsäurederivat der Formel I, Anspruch 1 enthält.

23. Die Verwendung der Phosphin- und Phosphonsäurederivate gemäss Anspruch 1 zur selektiven Bekämpfung von Unkräutern in Nutzpflanzenkulturen.

24. Die Verwendung der Phosphin- und Phosphonsäurederivate gemäss Anspruch 1 zur selektiven Bekämpfung von Unkräutern in Getreide-, Mais-, Reis- und Sojakulturen.

25. Die Verwendung der Phosphin- und Phosphonsäurederivate gemäss Anspruch 1 zur selektiven Bekämpfung von dikotylen Unkräutern in Nutzpflanzenkulturen.

26. Die Verwendung der Phosphin- und Phosphonsäurederivate gemäss Anspruch 1 im Nachlaufverfahren.

**Claims**

1. Novel phosphonic and phosphinic acid derivatives of the formula I

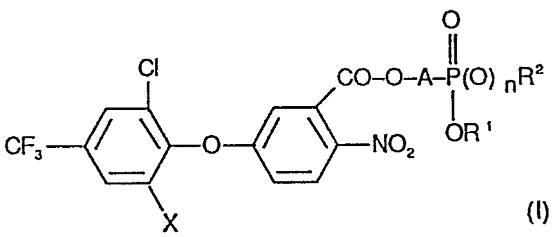

(I)

wherein
X is hydrogen or chlorine,
n is 0 or 1,
$R^1$ and $R^2$ are each independently hydrogen, $C_1$-$C_4$alkyl, $C_3$-$C_4$alkenyl, $C_3$-$C_4$alkynyl, $C_1$-$C_4$haloalkyl, $C_1$-$C_4$alkoxy-$C_1$-$C_4$alkyl, $C_1$-$C_4$cyanoalkyl, or are each independently a phenyl, phenyl-$C_1$-$C_4$alkyl or naphthyl radical which is unsubstituted or is substituted by one or two substituents selected from the group consisting of halogen, $C_1$-$C_4$alkyl, $C_1$-$C_4$alkoxy, $C_1$-$C_4$haloalkyl, $C_1$-$C_4$haloalkoxy, nitro and cyano, and A is a $C_1$-$C_3$alkyl chain which may be substituted by one or two $C_1$-$C_2$alkyl radicals and/or by one or two phenyl radicals, with the proviso that $R_2$ is not hydrogen if n is 0.

2. Novel phosphonic and phosphinic acid derivatives according to claim 1 of formula I wherein X is hydrogen, and n, $R^1$, $R^2$ and A are as defined in claim 1.

3. Novel phosphonic acid derivatives according to claim 1 of formula I wherein X is hydrogen, n is 1, and A, $R^1$ and $R^2$ are as defined in claim 1.

4. Novel phosphinic acid derivatives according to claim 1 of formula I wherein X is hydrogen, n is 0, $R^2$ is $C_1$-$C_4$alkyl or is a phenyl or naphthyl radical which is unsubstituted or is substituted by halogen, $C_1$-$C_4$alkyl, $C_1$-$C_4$alkoxy, $C_1$-$C_4$haloalkyl, $C_1$-$C_4$haloalkoxy, nitro or by cyano, and $R^1$ is as defined in claim 1.

5. 0,0-Diethylphosphonylmethyl 2-nitro-5-(2-chloro-4-trifluoromethylphenoxy) benzoate according to claim 1.

6. Methyl-0-ethylphosphinylmethyl 2-nitro-5-(2-chloro-4-trifluoromethylphenoxy) benzoate according to claim 1.

7. Dihydroxyphosphonylmethyl 2-nitro-5-(2-chloro-4-trifluoromethylphenoxy) benzoate according to claim 1.

8. Dihydroxyphosphonylmethyl 2-nitro-5-(2-chloro-4-trifluoromethylphenoxy) benzoate, isopropylamine salt, according to claim 1.

9. 0,0-Diisopropylphosphonylmethyl 2-nitro-5-(2-chloro-4-trifluoromethylphenoxy) benzoate according to claim 1.

10. 0,0-Dimethylphosphonylmethyl 2-nitro-5-(2-chloro-4-trifluoromethylphenoxy) .benzoate according to claim 1.

11. 0,0-Di-n-butylphosphonylmethyl 2-nitro-5-(2-chloro-4-trifluoromethylphenoxy) benzuoate according to claim 1.

12. Methyl-0-isopropylphosphinylmethyl 2-nitro-5-(2-chloro-4-trifluoromethylphenoxy) benzoate according to claim 1.

13. Ethyl-0-ethylphosphinylmethyl 2-nitro-5-(2-chloro-4-trifluoromethylphenoxy) benzoate according to claim 1.

14. 0,0-dimethylphosphonylethyl 2-nitro-5-(2-chloro-4-trifluoromethylphenoxy)benzoate according to claim 1.

15. Dihydroxyphosphonylethyl 2-nitro-5-(2-chloro-4-trifluoromethylphenoxy)benzoate, isopropylamine salt, according to claim 1.

16. 0,0-Dimethylphosphonylpropyl 2-nitro-5-(2-chloro-4-trifluoromethylphenoxy)benzoate according to claim 1.

17. Dihydroxyphosphonylpropyl 2-nitro-5-(2-chloro-4-trifluoromethylphenoxy)benzoate, isoprophylamine salt, according to claim 1.

18. A process for the preparation of phosphonic and phosphinic acid derivatives of formula I, claim 1, characterised in that 2-nitro-4-(2-chloro-4-trifluoromethylphenoxy)-benzoic acid, the acid halide or a reactive ester thereof of formula II

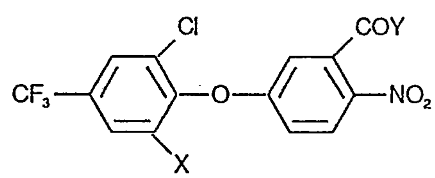

(II)

wherein
X is hydrogen or chlorine, and
Y is hydroxy, $C_1$-$C_4$alkoxy or halogen,
is reacted with a phosphinic or phosphonic acid derivative of formula III

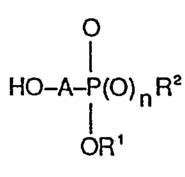

(III)

wherein A, n, $R^1$ and $R^2$ are as defined in claim 1, in an inert organic solvent, optionally in the presence of the equimolar amount of a base or a condensing agent, at a temperature in the range from −20°C to the boiling point of the reaction mixture, and the condensation product is isolated from the reaction mixture.

19. A process according to claim 18, characterised in that Y is the hydroxy group, and the reaction is carried out in the presence of sulphuric acid or in a water separator or in the presence of a condensing agent.

20. A process according to claim 18, characterised in that Y is a halogen atom, and the reaction is carried out in the presence of the equimolar amount of a base.

21. A process according to claim 18, characterised in that Y is a $C_1$-$C_4$alkoxy group, and the condensation is effected by boiling in an inert organic solvent, optionally in the presence of the catalytic amount of a base or acid.

22. A herbicidal composition, characterised in that it contains, as active ingredient, a phosphonic or phosphinic acid derivative of formula I, claim 1, together with inert adjuvants.

23. The use of the phosphinic and phosphonic acid derivatives according to claim 1 for selectively controlling weeds in crops of useful plants.

24. The use of the phosphinic and phosphonic acid derivatives according to claim 1 for selectively controlling weeds in crops of cereals, maize, rice and soybeans.

25. The use of the phosphinic and phosphonic acid derivatives according to claim 1 for selectively controlling dicotyledonous weeds in crops of useful plants.

26. The use of the phosphinic and phosphonic acid derivatives according to claim 1 in the postemergence method.

**Revendications**

1. Nouveaux dérivés d'acides phosphonique et phosphinique de formule I

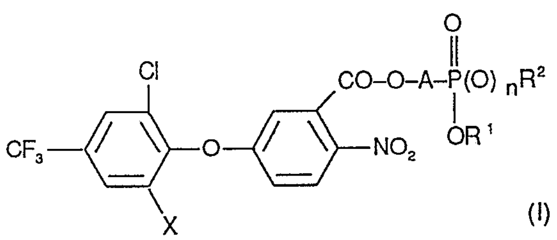

(I)

où

X représente un hydrogène ou un chlore,

n vaut zéro ou 1,

$R^1$ et $R^2$ représentent chacun indépendamment l'un de l'autre un hydrogène, alcoyle en $C_1$-$C_4$, alcényle en $C_3$-$C_4$, alcynyle en $C_3$-$C_4$, halogènalcoyle en $C_1$-$C_4$, alcoxy en $C_1$-$C_4$ -alcoyle en $C_1$-$C_4$, cyano-alcoyle en $C_1$-$C_4$, un radical phényle, phénylalcoyle en $C_1$-$C_4$ ou naphthyle qui peut être non substitué ou mono- à disubstitué par un halogène, un alcoyle en $C_1$-$C_4$, alcoxy en $C_1$-$C_4$, halogènalcoyle en $C_1$-$C_4$, halogènalcoxy en $C_1$-$C_4$, nitro ou cyano et A représente une chaîne alcoyle en $C_1$-$C_3$, qui peut être mono- à disubstitué par un alcoyle en $C_1$-$C_2$, et/ou un phényle, avec cette précision que $R^2$ ne représente pas un hydrogène lorsque n = 0.

2. Nouveaux dérivés d'acides phosphonique et phosphinique selon la revendication 1, de formule I, où X représente un hydrogène, tandis que n, $R^1$, $R^2$ et A ont la signification donnée dans la revendication 1.

3. Nouveaux dérivés d'acide phosphonique selon la revendication 1 de formule I, où X représente un hydrogène, n le nombre 1, tandis que A, $R^1$ et $R^2$ ont la signification donnée dans la revendication 1.

4. Nouveaux dérivés d'acide phosphinique selon la revendication 1 de formule I, où X représente un hydrogène, n vaut zéro, $R^2$ respésente un alcoyle en $C_1$-$C_4$ ou un radical phényle ou naphthyle qui est non substitué ou substitué par un halogène, alcoyle en $C_1$-$C_4$, alcoxy en $C_1$-$C_4$, halogènalcoyle en $C_1$-$C_4$, halogènalcoxy en $C_1$-$C_4$, nitro ou cyano, tandis que $R^1$ a la signification donnée dans la revendication 1.

5. 0,0-diéthylphosphonyl-méthylester de l'acide 2-nitro-5-(2-chloro-4-trifluorométhyl-phénoxy)-benzoïque selon la revendication 1.

6. Méthyl-0-éthyl-phosphinyl-méthylester de l'acide 2-nitro-5-(2-chloro-4-trifluorométhyl-phénoxy)-benzoïque selon la revendication 1.

7. Dihydroxy-phosphonyl-méthylester de l'acide 2-nitro-5-(2-chloro-4-trifluorométhyl-phénoxy)-benzoïque selon la revendication 1.

8. Sel d'isopropylamine de dihydroxy-phosphonyl-méthylester de l'acide 2-nitro-5-(2-chloro-4-trifluorométhyl-phénoxy)-benzoïque selon la revendication 1.

9. 0,0-diisopropyl-phosphonyl-méthylester de l'acide 2-nitro-5-(2-chloro-4-trifluorométhyl-phénoxy)-benzoïque selon la revendication 1.

10. 0,0-diméthyl-phosphonyl-méthylester de l'acide 2-nitro-5-(chloro-4-trifluorométhyl-phénoxy)-benzoïque selon la revendication 1.

11. 0,0-di-n-butyl-phosphonyl-méthylester de l'acide 2-nitro-5-(2-chloro-4-trifluorométhyl-phénoxy)-benzoïque selon la revendication 1.

12. Méthyl-0-isopropyl-phosphinyl-méthylester de l'acide 2-nitro-5-(2-chloro-4-trifluorométhyl-phenoxy)-benzoïque selon la revendication 1.

13. Ethyl-0-éthyl-phosphinyl-méthylester de l'acide 2-nitro-5-(2-chloro-4-trifluorométhyl-phénoxy)-benzoïque selon la revendication 1.

14. 0,0-diméthyl-phosphonyl-éthylester de l'acide 2-nitro-5-(2-chloro-4-trifluorométhyl-phénoxy)-benzoïque selon la revendication 1.

15. Sel d'isopropylamide de dihydroxy-phosphonyl-éthylester de l'acide 2-nitro-5-(2-chloro-4-trifluorométhyl-phénoxy)-benzoïque selon la revendication 1.

16. 0,0,diméthyl-phosphonyl-propylester de l'acide 2-nitro-5-(2-chloro-4-trifluorométhyl-phénoxy)-benzoïque selon la revendication 1.

17. Sel d'isopropylamine de dihydroxy-phosphonyl-propylester de l'acide 2-nitro-5-(2-chloro-4-trifluorométhyl-phénoxy)-benzoïque selon la revendication 1.

18. Procédé de préparation de dérivés d'acides phosphoniques et phosphiniques de formule I, de la revendication 1, caractérisé en ce qu'on fait réagir un acide 2-nitro-4-(2-chloro-4-trifluorométhyl-phénoxy)-benzoïque, son halogénure d'acide ou un de ses esters réactifs de formule II

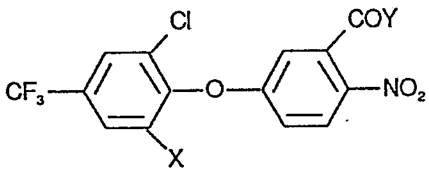

(II)

où

X représente un hydrogène ou un chlore

Y représente un hydroxyle, un alcoxy en $C_1$-$C_4$ ou un halogène, dans un solvant organique inerte, éventuellement en présence d'une quantité équimolaire d'une base ou d'un agent de fixation de l'eau, à une température comprise entre −20°C et le point d'ébullition du mélange réactionnel, avec un dérivé d'acide phosphinique ou phosphonique de formule III

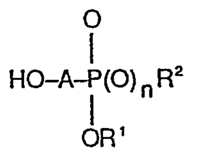

(III)

où A, n, $R^1$ et $R^2$ ont la signification donnée dans la revendication 1 et en ce que l'on isole du mélange réactionnel le produit de condensation.

19. Procédé selon la revendication 18, caractérisé en ce que Y représenté un hydroxyle et en ce qu'on conduit la réaction en présence d'acide sulfurique ou avec un séparateur d'eau ou en présence d'un agent de fixation de l'eau.

20. Procédé selon la revendication 18, caractérisé en ce que Y représente un atome d'halogène et en ce qu'on conduit la réaction en présence d'une quantité équimolaire d'une base.

21. Procédé selon la revendication 18, caractérisé en ce que Y représente un groupe alcoxy en $C_1$-$C_4$ et en ce qu'on conduit la réaction par ébullition dans un solvant organique inerte éventuellement en présence d'une quantité catalytique d'une base ou d'un acide.

22. Agent herbicide caractérisé en ce qu'il contient outre des ingrédients inertes, comme matière active un dérivé d'acide phosphonique ou phosphinique de formule I de la revendication 1.

23. Applications des dérivés d'acide phosphinique ou phosphonique selon la revendication 1 à la lutte sélective contre les mauvaises herbes dans les cultures de plante utiles.

24. Application des dérivés d'acide phosphonique et phosphinique selon la revendication 1 à la lutte sélective contre les mauvaises herbes dans les cultures de céréales, de maïs, de riz et de soja.

25. Application des dérivés d'acide phosphinique et phosphonique selon la revendication 1 à la lutte sélective contre les mauvaises herbes dicotylédones dans les culture de plantes utiles.

26. Application des dérivés d'acide phosphinique et phosphonique selon la revendication 1 dans le procédé de postlevée.